Europäisches Patentamt

European Patent Office

Office européen des brevets

(11) Veröffentlichungsnummer: **0 248 330**
**A2**

(12) **EUROPÄISCHE PATENTANMELDUNG**

(21) Anmeldenummer: **87107647.7**

(51) Int. Cl.⁴: **B23D 61/02**

(22) Anmeldetag: **26.05.87**

(30) Priorität: **03.06.86 DE 3618545**

(43) Veröffentlichungstag der Anmeldung:
**09.12.87 Patentblatt 87/50**

(84) Benannte Vertragsstaaten:
**DE FR GB NL SE**

(71) Anmelder: **Firma Joh. Wilh. Arntz**
**Lenneper Strasse 35**
**D-5630 Remscheid 1(DE)**

(72) Erfinder: **Diedrichs, Hans**
**Im Ziegelfeld 12**
**D-5630 Remscheid 11(DE)**
Erfinder: **Holverscheid, Franz**
**Dammstrasse 4**
**D-5630 Remscheid(DE)**

(74) Vertreter: **Patentanwälte Dr. Solf & Zapf**
**Schlossbleiche 20 Postfach 13 01 13**
**D-5600 Wuppertal 1(DE)**

(54) **Segmentkreissägeblatt.**

(57) Segmentkreissägeblatt mit einem Stammblatt, das peripher einen verdünnten Stammblattsteg aufweist, an dem übergreifend schneidezahntragende Segmente mittels Nieten befestigt sind, wobei ein Segment aus einem Segmentkörper besteht, der im unteren Segmentkantenbereich einem U-förmigen Längsschlitz aufweist, der durch zweiseitige Lappen gebildet wird, wobei die freien Endkanten der Lappen konkav bogenförmig ausgebildet sind und auf entsprechend konvex ausgebildeten Schulterflächen aufsitzen, die beiderseits neben dem Stammblattsteg angeordnet sind, wobei sich der Schlitzgrund des Schlitzes in Längsrichtung gerade erstreckt und mindestens an einem Punkt auf der Außenkante des Stammblattstegs aufsitzt.

EP 0 248 330 A2

## Segmentkreissägeblatt

Die Erfindung betrifft ein Segmentkreissägeblatt mit einem Stammblatt, das peripher einen verdünnten Stammblattsteg aufweist, an dem übergreifend schneidezahntragende Segmente befestigt sind.

Der Stammblattsteg eines bekannten Segmentkreissägeblatts weist - im Querschnitt betrachtet - peripher einen mittig angeordneten, im Querschnitt rechteckigen Stammblattsteg auf, der dünner ist, als die Breite des Stammblatts beträgt, und von dem beidseitig je eine rechtwinklig dazu ausgerichtete Schulterfläche abgeht. Jedes Segment weist einen den Stammblattsteg übergreifenden Schlitz auf. Der Schlitz wird durch zwei seitliche Lappen begrenzt. Die Lappen sitzen mit ihren freien Endkanten bündig auf den Schulterflächen auf. Zur Bestigung der Segmente am Stammblattsteg dienen Nieten, die quer zur Längserstreckung des Stammblattstegs ausgerichtete Löcher im Stammblattsteg und damit fluchtende Löcher in den Segmentlappen durchgreifen. Um ein Fluchten der aneinandergereihten Segmente sicherzustellen, werden benachbarte Segmente durch Nieten ausgerichtet, indem jeweils eine Lochhälfte in die Endkanten eines Segments eingebracht sind und jeweils eine Lochhälfte zweier Segmente von einem Niet durchgriffen werden.

Die Forderung des bündigen Aufsitzens der freien Endkanten der Lappen der Segmente auf den Schulterflächen des Stammblatts hat zur Folge, daß das Segment derart gefertigt werden muß, daß zwischen der freien Endkante des Stammblattstegs und dem Schlitzgrund des Segments ein spaltringförmiger Freiraum vorgesehen werden muß. Insofern steht für die Lagerung der Segmente nicht die gesamte Schlitztiefe zur Verfügung, was vom Standpunkt der Festigkeit der Segment-Stammblattstegverbindung günstiger wäre. Vor allem aber ist die Vernietung der Segmente untereinander aufwendig.

Aufgabe der Erfindung ist, eine Segment-Stammblattsteg-Lagerung zu schaffen, die festigkeitsmäßig günstiger ist und die eine Vernietung der Segmente untereinander überflüssig macht.

Diese Aufgabe wird durch die kennzeichnenden Merkmale des Hauptanspruchs gelöst. Vorteilhafte Weiterbildungen der Erfindung werden in den Unteransprüchen gekennzeichnet. Anhand der in der Zeichnung abgebildeten Beispiele wird die Erfindung im folgenden näher erläutert. Es zeigen:

Fig. I schematisch eine Seitenansicht eines Segments,

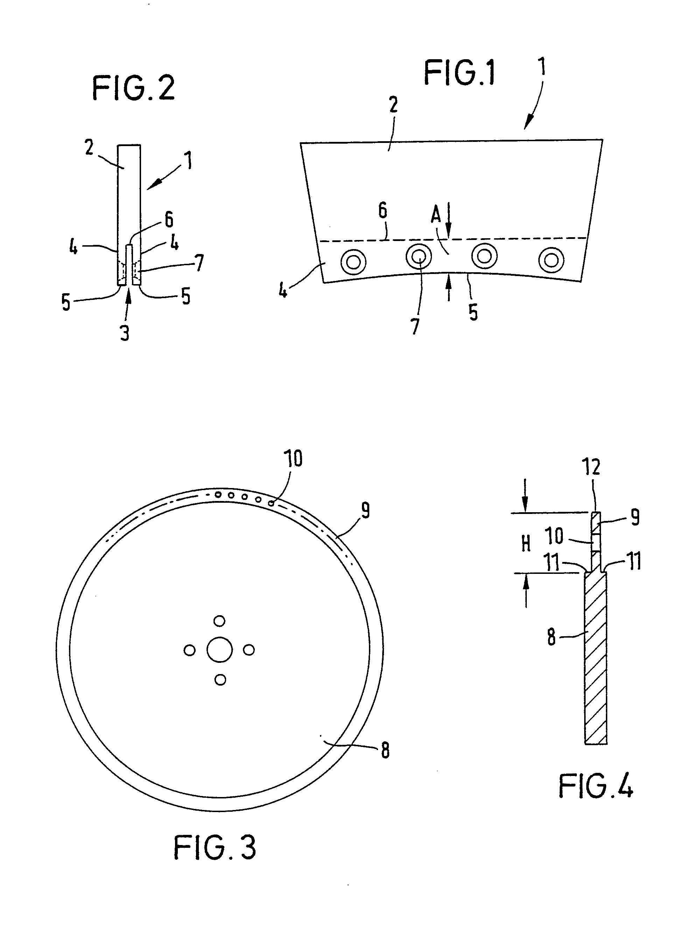

Fig. 2 eine Frontansicht eines Segments,

Fig. 3 eine Seitenansicht eines Stammblatts,

Fig. 4 eine Frontansicht einer Hälfte eines Stammblatts,

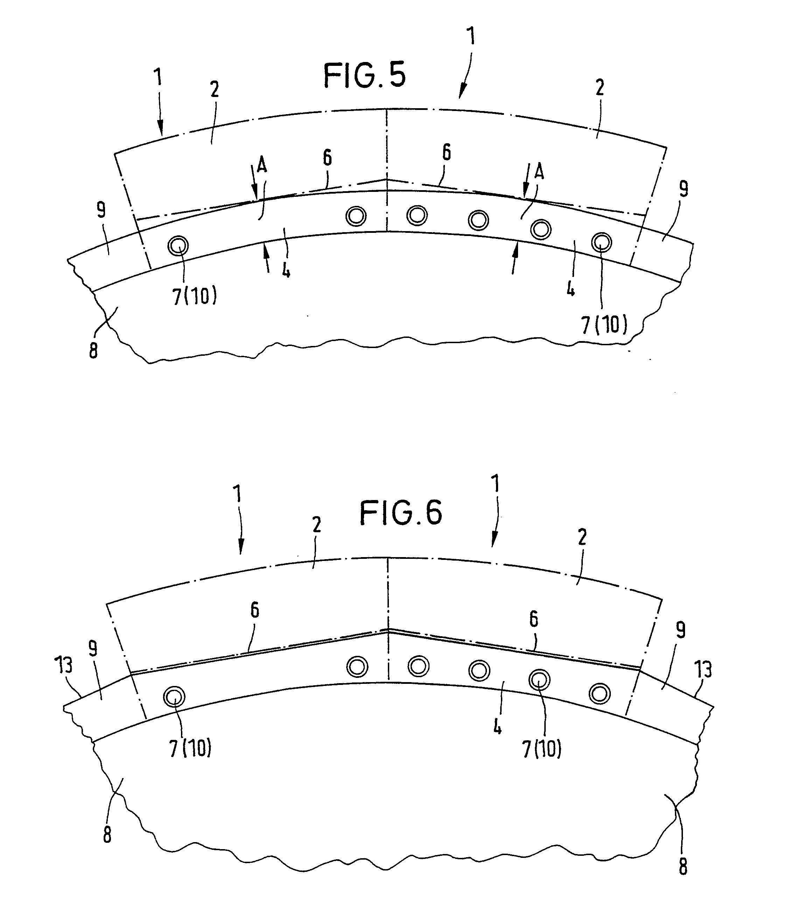

Fig. 5 schematisch die Anordnung zweier Segmente auf einem Stammblatt,

Fig. 6 eine weitere Ausführungsform der Segment-Stammblattsteg-Lagerung.

Das Segment I besteht aus dem Segmentkörper 2, der im unteren Segmentkantenbereich einen U-förmigen Längsschlitz 3 aufweist. Der obere freie Segmentkantenbereich ist mit Schneidezähnen versehen (nicht dargestellt). Der Schlitz 3 wird durch zwei seitliche Lappen 4 gebildet. Die freien Endkanten 5 der Lappen 4 verlaufen in Längsrichtung konkav bogenförmig (Fig. I). Der Schlitzgrund 6 des Schlitzes 3 dagegen erstreckt sich in Längsrichtung gerade und ist vorzugsweise ebenflächig ausgebildet. In den Lappen 4 befinden sich fluchtend Nietlöcher 7 für die Befestigung eines Segments I am Stammblattsteg 9 mittels Nieten (nicht dargestellt).

Das kreisscheibenförmige Stammblatt 8 weist peripher einen mittig verlaufenden Stammblattsteg 9 mit Nietlöchern I0 auf. Der Stammblattsteg 9 ist im Querschnitt vorzugsweise rechteckig ausgebildet. Beiderseits neben dem Stammblattsteg 9 ist je eine rechtwinklig zum Stammblattsteg 9 verlaufende Schulterfläche II angeordnet.

Der geringste Abstand "A" in der Längsmitte des Segments I zwischen der freien Endkante 5 und dem Schlitzgrund 6 entspricht genau der Höhe "H" des Stammblattstegs 9, so daß sich neben dem bündigen Aufsitzen der Endkanten 5 der Lappen 4 auf den Schulterflächen II des Stammblatts 8 eine stützpunktartige Auflagerung eines Teils des Schlitzgrundes 6 auf der Umfangskante I2 des Stammblattstegs 9 ergibt.

Anstelle der punktuellen Auflagerung des Schlitzgrundes 6 kann man im Rahmen der Erfindung auch ein linienförmiges Aufsitzen vorsehen. Zu diesem Zweck wird die freie Endkante I2 des Stammblattstegs 9 - in Längsrichtung betrachtet - polygonal ausgebildet sein (Fig. 6), wobei die Länge einer geraden Strecke I3 der freien Endkante I2 des Stammblattstegs 9 vorzugsweise der Länge des Schlitzgrundes 6 eines Segments I entspricht.

Die erfindungsgemäße neue Abstützung der Segmente macht es in überraschender Weise überflüssig, Verbindungsnieten zwischen den Segmenten I vorzusehen, da sichergestellt ist, daß die Segmente I durch die konstruktionsbedingte Ausführung eine zuverlässige Radialzentrierung erfahren und untereinander ohne weiteres fluchten.

Da die Verbindungsnieten zwischen den Segmenten entfallen können, kann man den Stammblattsteg 9 höher als bisher möglich ausführen, woraus eine besonders hohe Seitenstabilität der Lagerung der Segmente resultiert. Das Fehlen der Verbindugsnieten zwischen den Segmenten macht eine sehr viel einfachere und genauere Instandsetzung der Sägeblätter mit Ersatzsegmenten möglich. Die Sägeblätter sind erheblich reparaturfreundlicher.

Das Einbringen eines gerade verlaufenden Schlitzgrundes sowie auch die Ausbildung einer gerade verlaufenden Strekke l3 an der freien Endkante l2 des Stammblattstegs 9 ist sehr viel einfacher und genauer zu bewerkstelligen als gekrümmte Elemente. Die gerade Ausbildung macht eine Anpassung der sich abstützenden Elemente erst möglich.

## Ansprüche

l. Segmentkreissägeblatt mit einem Stammblatt, das peripher einen verdünnten Stammblattsteg aufweist, an dem übergreifend schneidezahntragende Segmente mittels Nieten befestigt sind, wobei ein Segment aus einem Segmentkörper besteht, der im unteren Segmentkantenbereich einen U-förmigen Längsschlitz aufweist, der durch zweiseitige Lappen gebildet wird, wobei die freien Endkanten der Lappen konkav bogenförmig ausgebildet sind und auf entsprechend konvex ausgebildeten Schulterflächen aufsitzen, die beiderseits neben dem Stammblattsteg angeordnet sind, **dadurch gekennzeichnet, daß** sich der Schlitzgrund (6) des Schlitzes (3) in Längsrichtung gerade erstreckt und mindestens an einem Punkt auf der Außenkante des Stammblattstegs (9) aufsitzt.

2. Segmentkreussägeblatt nach Anspruch l, **dadurch gekennzeichnet,** daß der geringste Abstand "A" in der Längsmitte des Segments (l) zwischen der freien Endkante (5) und dem Schlitzgrund (6) genau der Höhe "H" des Stammblattstegs (9) entspricht, so sich eine stützpunkartige Auflagerung eines Teils des Schlitzgrundes (6) auf der Umfangskante (l2) des Stammblattstegs (9) ergibt.

3. Segmentkreissägeblatt nach Anspruch l und/oder 2, **dadurch gekennzeichnet,** daß der Schlitzgrund (6) linienförmig auf der Umfangskante (l2) aufsitzt.

4. Segmentkreissägeblatt nach Anspruch 3, **dadurch gekennzeichnet,** daß die freie Endkante (l2) des Stammblattstegs (9) polygonal ausgebildet ist.

5. Segmentkreissägeblatt nach Anspruch 4, **dadurch gekennzeichnet, daß** die Länge einer geraden Strecke (l3) der freien Endkante (l2) des Stammblattstegs (9) der Länge des Schlitzgrundes (6) eines Segments (l) entspricht.

6. Segmentkreissägeblatt nach einem oder mehreren der Ansprüche l bis 5, **dadurch gekennzeichnet, daß** der Aufsitzpunkt bzw. die Aufsitzlinie zwischen dem Stammblattsteg (9) und dem Schlitzgrund (6) weiter von den Schultern (ll) angeordnet ist, als l/3 der Höhe des Segments, vorzugsweise bis l/2 der Höhe des Segments, beträgt.

FIG.2

FIG.1

FIG.3

FIG.4

FIG.5

FIG.6

4557